# EUROPEAN PATENT SPECIFICATION

(11) **EP 4 346 450 B1**
(45) Date of publication and mention of the grant of the patent: **26.02.2025**
(21) Application number: 22732137.9
(22) Date of filing: 03.06.2022
(51) Int. Cl.: A23L 33/125, A23L 33/00

(54) **INFANT FORMULA FOR FEEDING INFANTS RECEIVING INFANT FORMULA AND HUMAN BREAST MILK**
SÄUGLINGSNAHRUNG ZUR ERNÄHRUNG VON SÄUGLINGEN, DIE SÄUGLINGSNAHRUNG UND MENSCHLICHE MUTTERMILCH ERHALTEN
FORMULE INFANTILE DESTINÉE À L'ALIMENTATION DES NOURRISSONS RECEVANT UNE FORMULE INFANTILE ET DU LAIT MATERNEL HUMAIN

(30) Priority: 04.06.2021 EP 21177688
(43) Date of publication of application: 10.04.2024
(73) Proprietor: N.V. Nutricia, 2712 HM Zoetermeer (NL)
(72) Inventor: VAN DER MERWE, Liandre Frances, 3584 CT Utrecht (NL); STAHL, Bernd, 3584 CT Utrecht (NL); MA, Nan, 3584 CT Utrecht (NL)
(74) Representative: Nederlandsch Octrooibureau
(86) International application number: PCT/EP2022/065206
(87) International publication number: WO 2022/254016

(56) References cited:
- WO-A1-2013/025104
- WO-A1-2020/239996
- AU-B2- 2015 340 652
- US-A1- 2020 383 367
- AUSTIN SEAN ET AL: "Temporal Change of the Content of 10 Oligosaccharides in the Milk of Chinese Urban Mothers", NUTRIENTS, vol. 8, no. 6, 8 June 2016 (2016-06-08), pages 346, XP055783583, DOI: 10.3390/nu8060346

## Description

### Field of the invention

The present invention relates to an infant formula suitable for feeding infants who receive both infant formula and human breast milk, also referred as mixed milk fed infants.

### Background of the invention

Human milk is regarded as the gold standard of infant nutrition due to its unique and unrivalled combination of nutritive and functional components. The World Health Organisation (WHO), and others, therefore recommend that infants be provided human milk exclusively up to 6 months of age. When a mother is unable to breastfeed her infant, or chooses not to breastfeed, an infant formula (IF) which is developed based on the composition of mature human milk, is recognised as the best alternative to human milk. Research to improve the quality of infant formula is not necessarily aimed at mimicking the exact composition of human milk but at achieving the functional effects beyond the mere nutritional aspects observed in breastfed infants.

Despite the WHO recommendation that infants be exclusively breastfed up to 6 months of age, mixed milk feeding is common in populations around the world, i.e. infants receive both infant formula and human breast milk from birth onwards and up to 6 months of age. In China, for example, it is common hospital practice that new-born infants are first given infant formula and only overtime, i.e. after one to three months after birth, start receiving human milk from the mother. In many European countries often infants start by receiving exclusively mother's milk and after a couple of months formula feeding is introduced for example when maternity leave ends and mothers have to return to their jobs and infants stay at day-care centres during the daytime.

Human milk provides several bioactive factors that benefit the relatively immature immune system of neonates early in life. These components have been categorized into two different groups according to either their protective role or their ability to promote maturation. Human milk oligosaccharides (HMOs) are considered to play a part in both protection and maturation. In the quest for improved infant formula with a more optimal composition towards mimicking the beneficial effects of human milk as close as possible, considerable attention has been given to HMOs.

Many of the structures of HMOs discovered to date, and that are described in Urashima et al. (Trends in Glycoscience and Glycotechnolology, 2018, 30; 172, SE51-SE65), exhibit a lactose, lactosamine or lacto-N-biose core or both and polymers thereof, which can be further bound to either fucose or sialic acids or both. These structures confer a high chemical variability and protection from digestion, with the effect that the majority of HMOs are neither absorbed nor metabolised in the proximal intestines and reach the distal intestines undigested to exert prebiotic effects on certain bacterial populations, to reinforce the intestinal barrier and to protect against enteropathogen infections. HMOs are present in human breast milk in a relatively high proportion (5-20 g/L). The most abundant HMO is 2'-fucosyllactose (2'-FL) representing ~20% of the total oligosaccharides in human breast milk of secretors. *In vitro* and *in vivo* studies with 2'-FL have evidenced its immunomodulatory effects, which include promoting anti-inflammatory activities (He et al. Gut 2016; 65:33-46) and the inhibition of the colonization of pathogens (Ruiz-Palacios et al. J Biol Chem 2003; 278:14112-20).

Slupsky concluded that milk maturation is not stochastic (book chapter in Donovan et al. (eds.) on "Human Milk: Composition, Clinical Benefits and Future Opportunities", Nestlé Nutr Inst Workshop Ser 2019, 90:179-190). Slupsky reviewed that the human milk composition is carefully controlled by the mammary gland which is guided by maternal genetics, and continuously changing to meet the nutrient requirements of the neonate and help guide microbial succession throughout the period of exclusive milk feeding and possibly beyond. Furthermore, microbial and fecal metabolic profiles were found to be more similar between formula-fed infants from different mothers than breastfed infants from different mothers (He et al, mSystems 2016; 1:e00128-16; O'Sullivan et al, J Proteome Res 2013; 12:2833-2845). It was speculated that this could be attributed to the differences in milk composition between mothers who are breastfeeding and driven by changes in milk composition over the lactation period, whereas in contrast the composition of the infant formula does not change. Austin et al., Nutrients 2016, 8, 346; doi: 10:3390/nu8060346 reports on the temporal change of the content of10 oligosaccharides in the milk of Chinese urban mothers.

WO 2019/110800 discloses spray-dried powders containing a mixture of structurally distinct human milk oligosaccharides, methods for the production of said spray-dried powder, its use for the manufacture of nutritional compositions, and nutritional compositions containing said spray-dried powder. The disclosure motivates supplementing nutritional compositions with a combination of different HMOs and makes a link to infant formula. The structurally distinct HMOs of the mixture of can be selected from the group consisting of 2'-FL, 3-FL, LNT, LNnT, LNFPI, 3'-SL, 6'-SL, LST-a, LST-b, LST-c and DSLNT (page 7, lines 8-10).

A product that consists of five human milk oligosaccharides 2'-fucosyllactose (2'-FL), 3-fucosyllactose (3-FL), lacto-N-tetraose (LNT), 3'-sialyllactose (3'-SL) and 6'-sialyllactose (6'-SL) is marketed by Jennewein Biotechnologie GmbH under the name 5HMO-Mix.

### Summary of the invention

The invention is based on a study, wherein the human milk composition of two groups of Chinese mothers was analysed. Group I employed exclusively breastfeeding (BF), i.e. without additional formula feeding; and group II employed mixed milk feeding (MMF), i.e. a combination of breast feeding and formula feeding.

The inventors have found that there are systematic variations in the HMO compositions between the two groups I and II. While 2'-fucosyllactose (2'-FL) was not significantly different between groups I and II, it was found that 3-fucosyllactose (3-FL) differed significantly and was found to be [on average] about 92 µg/ml higher in group II (MMF) than compared to group I (BF).

The inventors have thus identified a need to provide a modified infant formula which is suitable for feeding infants who receive both infant formula and human breast milk (mixed milk fed infants) and which accounts for and compensates the differences observed between group I (BF) mothers and group II (MMF) mothers.

Accordingly, infant formula are provided that are suitable for feeding infants who receive both infant formula and human breast milk (mixed milk fed infants) comprising 2'-FL and 3-FL and that require a specific weight ratio of these HMOs and specific amounts of both HMOs. With the required boundaries for 2'-FL and 3-FL, the differences in HMO intake that are found in MMF infants compared to BF infants is accounted and compensated for.

In addition to 2'-FL and 3-FL it was also found that the level of level of 3'-sialyllactose (3'-SL) and 6'-sialyllactose (6'-SL) varied significantly between groups II and I. It was found that the level of 3'-SL was [on average] about 30 µg/ml higher in group II (MMF) than compared to group I (BF) mothers and the level of 6'-SL was [on average] about 76 µg/ml higher in group II (MMF) than compared to group I (BF) mothers.

Hence, according to the invention, the infant formula can be advantageously further modified by including a specific amount of 3'-SL and in a specific ratio to 2'-FL and/or including as specific amount of 6'-SL and in a specific ratio to 2'-FL. By requiring additional boundaries for 3'-SL or 6'-SL, the differences in HMO intake that are found in MMF infants compared to BF infants is further accounted and compensated for. The differences in HMO intake that are found in MMF infants compared to BF infants are even more accounted and compensated for by requiring the boundaries for both 3'-SL and 6'-SL.

### Detailed description of the invention

The present invention thus relates to an infant formula suitable for feeding infants who receive both infant formula and human breast milk (mixed milk fed infants), comprising
a) 2'-fucosyllactose (2'-FL) and 3-fucosyllactose (3-FL) in a weight ratio 2'-FL : 3-FL of at least 2.5:1, and
b) 3-FL in a concentration of at most 240 µg/ml and/or, and
c) 2'-FL in a concentration of at least 500 µg/ml.

The ingredients in the infant formula according to the invention can also be represented in amounts based on dry weight. Hence the present invention thus relates to an infant formula suitable for feeding infants who receive both infant formula and human breast milk (mixed milk fed infants), comprising
a) 2'-fucosyllactose (2'-FL) and 3-fucosyllactose (3-FL) in a weight ratio 2'-FL : 3-FL of at least 2.5:1, and
b) 3-FL in a concentration of at most 180 mg/100 g dry weight, and
c) 2'-FL in a concentration of at least 375 mg/100 g dry weight.

The ingredients in the infant formula according to the invention can also be represented in amounts based on calories. Hence the present invention thus relates to an infant formula suitable for feeding infants who receive both infant formula and human breast milk (mixed milk fed infants), comprising
a) 2'-fucosyllactose (2'-FL) and 3-fucosyllactose (3-FL) in a weight ratio 2'-FL : 3-FL of at least 2.5:1, and
b) 3-FL in a concentration of at most 36 mg/100 kcal, and
c) 2'-FL in a concentration of at least 75 mg/100 kcal.

In one embodiment, the infant formula according to the invention preferably further comprises
d) 3'-sialylactose (3'-SL) in a weight ratio 2'-FL : 3'-SL of at least 11.2:1, and
e) 3'-SL in a concentration of at most 100 µg/ml.

When expressed in amounts based on dry weight, the present infant formula preferably further comprises
d) 3'-sialylactose (3'-SL) in a weight ratio 2'-FL : 3'-SL of at least 11.2:1, and
e) 3'-SL in a concentration of at most 75 mg/100 g dry weight.

When expressed in amounts based on calories, the present infant formula preferably further comprises
d) 3'-sialylactose (3'-SL) in a weight ratio 2'-FL : 3'-SL of at least 11.2:1, and
e) 3'-SL in a concentration of at most 15 mg/100 kcal.

In another embodiment, the infant formula according to the invention preferably further comprises
f) 6'-sialyllactose (6'-SL) in a weight ratio 2'-FL : 6'-SL of at least 1.8:1, and
g) 6'-SL in a concentration of at most 300 µg/ml.

When expressed in amounts based on dry weight, the present infant formula preferably further comprises
f) 6'-sialyllactose (6'-SL) in a weight ratio 2'-FL : 6'-SL of at least 1.8:1, and
g) 6'-SL in a concentration of at most 225 mg/100 g dry weight.

When expressed in amounts based on calories, the present infant formula preferably further comprises
f) 6'-sialyllactose (6'-SL) in a weight ratio 2'-FL : 6'-SL of at least 1.8:1, and
g) 6'-SL in a concentration of at most 45 mg/100 kcal.

In a preferred embodiment, the infant formula according to the invention further comprises
d) 3'-sialylactose (3'-SL) in a weight ratio 2'-FL : 3'-SL of at least 11.2:1, and
e) 3'-SL in a concentration of at most 100 µg/ml, and
f) 6'-sialyllactose (6'-SL) in a weight ratio 2'-FL : 6'-SL of at least 1.8:1, and
g) 6'-SL in a concentration of at most 300 µg/ml.

When expressed in amounts based on dry weight, in a preferred embodiment, the infant formula according to the invention further comprises
d) 3'-sialylactose (3'-SL) in a weight ratio 2'-FL : 3'-SL of at least 11.2:1, and
e) 3'-SL in a concentration of at most 75 mg/100 g dry weight, and
f) 6'-sialyllactose (6'-SL) in a weight ratio 2'-FL : 6'-SL of at least 1.8:1, and
g) 6'-SL in a concentration of at most 225 mg/100 g dry weight.

When expressed in amounts based on calories, in a preferred embodiment, the infant formula according to the invention further comprises
d) 3'-sialylactose (3'-SL) in a weight ratio 2'-FL : 3'-SL of at least 11.2:1, and
e) 3'-SL in a concentration of at most 15 mg/100 kcal, and
f) 6'-sialyllactose (6'-SL) in a weight ratio 2'-FL : 6'-SL of at least 1.8:1, and
g) 6'-SL in a concentration of at most 45 mg/100 kcal.

Preferably, the infant formula according to the invention comprises 2'-FL in a concentration in the range of 500 µg/ml - 1500 µg/ml, preferably in the range of 750 µg/ml - 1250 µg/ml. When expressed in amounts based on dry weight, preferably the infant formula according to the invention comprises 2'-FL in a concentration in the range of 375 mg/100 g dry weight- 1125 mg/100 g dry weight, preferably in the range of 560 mg/100 g dry weight - 940 mg/100 g dry weight. When expressed in amounts based on calories, preferably the infant formula according to the invention comprises 2'-FL in a concentration in the range of 75 mg/100 kcal - 225 mg/100 kcal, preferably in the range of 110 mg/100 kcal - 190 mg/100 kcal.

Preferably, the infant formula according to the invention comprises 3-FL in a concentration in the range of 50 µg/ml - 240 µg/ml. When expressed in amounts based on dry weight, preferably the infant formula according to the invention comprises 3-FL in a concentration in the range of 37 mg/100 g dry weight - 180 mg/100 g dry weight. When expressed in amounts based on calories, preferably the infant formula according to the invention comprises 3-FL in a concentration in the range of 7 mg/100 kcal - 36 mg/100 kcal.

Preferably, the infant formula according to the invention comprises 3'-SL in a concentration in the range of 10 µg/ml - 100 µg/ml, preferably in the range of 10 µg/ml - 75 µg/ml. When expressed in amounts based on dry weight, preferably the infant formula according to the invention comprises 3'-SL in a concentration in the range of 7 mg/100 g dry weight - 75 mg/100 g dry weight, preferably in the range of 7 mg/100 g dry weight - 56 mg/100 g dry weight. When expressed in amounts based on calories, preferably the infant formula according to the invention comprises 3'-SL in a concentration in the range of 1 mg/100 kcal - 15 mg/100 kcal, preferably in the range of 1 mg/100 kcal - 12 mg/100 kcal.

Preferably, the infant formula according to the invention comprises 6'-SL in a concentration in the range of 50 µg/ml - 300 µg/ml, preferably in the range of 50 µg/ml - 250 µg/ml. When expressed in amounts based on dry weight, preferably the infant formula according to the invention comprises 6'-SL in a concentration in the range of 37 mg/100 g dry weight - 225 mg/100 g dry weight, preferably in the range of 37 mg/100 g dry weight - 190 mg/100 g dry weight. When expressed in amounts based on calories, preferably the infant formula according to the invention comprises 6'-SFL in a concentration in the range of 7 mg/100 kcal - 45 mg/100 kcal, in the range of 7 mg/100 kcal - 38 mg/100 kcal.

In a further aspect, the invention also relates to a method for providing nutrition to an infant using the infant formula according to the invention, wherein the infant is both formula-fed and breastfed, wherein the infant is between 0 and 12 months, more preferably between 0 and 6 months, and most preferably between 0 and 4 months.

For some jurisdictions, providing nutrition to an infant is considered therapeutic, other jurisdictions consider providing nutrition to an infant to be not therapeutic, hence the invention also pertains to a non-therapeutic method for providing nutrition to an infant using the infant formula according to the invention, wherein the infant is both formula-fed and breastfed, wherein the infant is between 0 and 12 months, more preferably between 0 and 6 months, and most preferably between 0 and 4 months.

In yet another analogous embodiment, the invention relates to the use of the infant formula according to the invention for providing nutrition to an infant, wherein the infant is both formula-fed and breastfed, wherein the infant is between 0 and 12 months, more preferably between 0 and 6 months, and most preferably between 0 and 4 months.

Hence, in a preferred embodiment according to the invention the infant formula suitable for feeding infants who receive both infant formula and human breast milk (mixed milk fed infants) provides for a balanced nutrition and/or provides for an overall nutrition which is more similar to the nutrition of infants at the same age which are exclusively fed with human breast milk, wherein the infant is between 0 and 12 months, more preferably between 0 and 6 months, and most preferably between 0 and 4 months.

Analogously, in a preferred embodiment according to the invention the infant formula suitable for feeding infants who receive both infant formula and human breast milk (mixed milk fed infants) provides for counteracting the observed effects between the two study groups, and thereby provides for an overall nutrition which is more similar to the nutrition of infants at the same age which are exclusively fed with human breast milk, wherein the infant is between 0 and 12 months, more preferably between 0 and 6 months, and most preferably between 0 and 4 months.

Worded differently, in a preferred embodiment according to the invention the infant formula suitable for feeding infants who receive both infant formula and human breast milk (mixed milk fed infants) provides for counteracting the observed systematic variations in the HMOs compositions between the groups I and II, i.e. between exclusively breast feeding (BF) without additional formula feeding, and mixed milk feeding (MMF), and thereby provides for an overall nutrition which is more similar to the nutrition of infants at the same age which are exclusively fed with human breast milk, wherein the infant is between 0 and 12 months, more preferably between 0 and 6 months, and most preferably between 0 and 4 months.

In the context of the present invention, the infants that receive both infant formula and human breast milk preferably receive breast milk from mothers that are of mongoloid race, or in other words, infants that are fed breast milk from a mongolian mother. In a more general term it can be said that in the context of the present invention, the infants that receive both infant formula and human breast milk preferably receive breast milk from mothers of Chinese origin. Likewise, In the context of the present invention, the infants that receive both infant formula and human breast milk preferably are of mongoloid race, or more generally are of Chinese origin. Preferably the infants that receive both infant formula and human breast milk are of mongoloid race and receive breast milk from mothers of mongoloid race. More generally, preferably the infants that receive both infant formula and human breast milk are of Chinese origin and receive breast milk from mothers of Chinese origin.

HMOs suitable for prepare the infant formula according to the present invention are commercially available, for example from Jennewein Biotechnologie GmbH. Otherwise it is well within the reach of the skilled person to obtain the HMOs by isolation from suitable sources or by chemical synthesis.

In a preferred embodiment, the infant formula suitable for feeding infants who receive both infant formula and human breast milk (mixed milk fed infants) can be obtained by mixing the individual HMO components, together with the other known ingredients of infant formula, to obtain the quantitative infant formula composition according to the invention.

The HMOs used according to the invention, i.e. 2'-FL, 3-FL, 3'-SL and 6'-SL, are each known to suppress one or more of the pathogens present in the human gut, such as *Campylobacter jejuni, Salmonella* species, *Streptococci* species, noroviruses and rotaviruses. The HMOs are also beneficial for a natural gut microbiome by promoting the growth of beneficial gut bacteria, such as *Bifidobacteria* species, *Lactobacilli* and *Bacteroides* species. 2'-FL, 3-FL and 6'-SL are further known to promote intestinal motility and intestinal epithelial cell maturation. Generally, fucosylated and sialylated HMOs have immune-regulatory functions and positively influence levels of cytokines and inflammation markers in non-breastfed and mixed-fed children. 3SL and 6SL are also implicated in the brain development of infants and play a role in cognition and neuronal regulation.

Preferably, the present infant formula further comprises fructo-oligosaccharides (FOS). Fructo-oligosaccharides are a non-digestible oligosaccharides (NDO) comprising a chain of beta-linked fructose units with a degree of polymerization (DP) or average DP of 2 to 250, more preferably 2 to 100, even more preferably 10 to 60. Fructo-oligosaccharide includes inulin, levan and/or a mixed type of polyfructan. An especially preferred fructo-oligosaccharide is inulin. Fructo-oligosaccharide suitable for use in the compositions is also commercially available, e.g. Raftiline^{®}HP (Orafti). Preferably the fructo-oligosaccharide has an average DP above 20.

Preferably, the present infant formula further comprises galacto-oligosaccharides (GOS), preferably the galacto-oligosaccharides comprise beta-galactooligosaccharides and/or alpha galactooligosaccharides. The galacto-oligosaccharides preferably are beta-galacto-oligosaccharides. In a particularly preferred embodiment the present infant formula comprises beta-galacto-oligosaccharides ([galactose]n-glucose; wherein n is an integer ranging from 2 to 60, i.e. 2, 3, 4, 5, 6, ...., 59 ,60; preferably n is selected from 2, 3, 4, 5, 6, 7, 8, 9, and 10), wherein the galactose units are in majority linked together via a beta linkage. Beta-galacto-oligosaccharides are also referred to as trans-galacto-oligosaccharides (TOS). Beta-galacto-oligosaccharides are for example sold under the trademark Vivinal(TM) (Borculo Domo Ingredients, Netherlands). Another suitable source is Bi2Munno (Classado). Preferably the galacto-oligosaccharides comprise beta-1,3, beta-1,4 and/or beta-1,6 linkages. In a preferred embodiment, galacto-oligosaccharides comprise at least 80 % beta-1,4 and beta-1,6 linkages based on total linkages, more preferably at least 90 %. In another preferred embodiment, the galacto-oligosaccharides comprise at least 50 % beta-1,3 linkages based on total linkages, more preferably at least 60 % based on total linkages.

Galacto-oligosaccharides, preferably beta-galacto-oligosaccharides, are more capable of stimulating bifidobacteria. Preferably the present infant formula comprises galacto-oligosaccharides, preferably beta-galacto-oligosaccharides, with a degree of polymerization (DP) of 2 to 10, preferably with an average DP in the range of 3 to 7.

In a further embodiment, the present infant formula comprises fructo-oligosaccharides and galacto-oligosaccharides (GOS), preferably the galacto-oligosaccharides comprise beta-galacto-oligosaccharides. More preferably the fructo-oligosaccharides are long chain fructo-oligosaccharides (IcFOS) with an average DP above 20. More preferably the galacto-oligosaccharides are short chain galacto-oligosaccharides (scGOS) with an average DP in the range of 3 to 7. The weight ratio of short chain galacto-oligosaccharides and long chain fructo-oligosaccharides ranges from 100:1 to 1:10, preferably from 20:1 to 1:1, preferably is about 9:1.

The present infant formula preferably comprises lipid, protein and digestible carbohydrate wherein the lipid provides 5 to 50% of the total calories, the protein provides 5 to 50% of the total calories, and the digestible carbohydrate provides 15 to 90% of the total calories. Preferably, in the present infant formula, the lipid provides 35 to 50% of the total calories, the protein provides 7.0 to 12.5% of the total calories, and the digestible carbohydrate provides 40 to 55% of the total calories. For calculation of the % of total calories for the protein, the total of energy provided by proteins, peptides and amino acids needs to be taken into account. Preferably the lipid provides 3 to 7 g lipid per 100 kcal, preferably 4 to 6 g per 100 kcal, the protein provides 1.6 to 4 g per 100 kcal, preferably 1.7 to 2.5 g per 100 kcal and the digestible carbohydrate provides 5 to 20 g per 100 kcal, preferably 8 to 15 g per 100 kcal of the nutritional composition. Preferably the present infant formula comprises lipid providing 4 to 6 g per 100 kcal, protein providing 1.6 to 2.0 g per 100 kcal, more preferably 1.7 to 1.9 g per 100 kcal and digestible carbohydrate providing 8 to 15 g per 100 kcal of the nutritional composition. In one embodiment, the lipid provides 3 to 7 g lipid per 100 kcal, preferably 4 to 6 g per 100 kcal, the protein provides 1.6 to 2.1 g per 100 kcal, preferably 1.6 to 2.0 g per 100 kcal and the digestible carbohydrate provides 5 to 20 g per 100 kcal, preferably 8 to 15 g per 100 kcal of the infant formula and wherein preferably the digestible carbohydrate component comprises at least 60 wt% lactose based on total digestible carbohydrate, more preferably at least 75 wt%, even more preferably at least 90 wt% lactose based on total digestible carbohydrate. The amount of total calories is determined by the sum of calories derived from protein, lipids, digestible carbohydrates and non-digestible oligosaccharide.

The present infant formula preferably comprises a digestible carbohydrate component. Preferred digestible carbohydrate components are lactose, glucose, sucrose, fructose, galactose, maltose, starch and maltodextrin. Lactose is the main digestible carbohydrate present in human milk. The present infant formula preferably comprises lactose. Preferably the present infant formula does not comprise high amounts of carbohydrates other than lactose. Compared to digestible carbohydrates such as maltodextrin, sucrose, glucose, maltose and other digestible carbohydrates with a high glycemic index, lactose has a lower glycemic index and is therefore preferred. The present infant formula preferably comprises digestible carbohydrate, wherein at least 35 wt%, more preferably at least 50 wt%, more preferably at least 60 wt%, more preferably at least 75 wt%, even more preferably at least 90 wt% , most preferably at least 95 wt% of the digestible carbohydrate is lactose. Based on dry weight the present infant formula preferably comprises at least 25 wt% lactose, preferably at least 40 wt%, more preferably at least 50 wt% lactose.

The present infant formula preferably comprises at least one lipid selected from the group consisting of animal lipid (excluding human lipids) and vegetable lipids. Preferably the present infant formula comprises a combination of vegetable lipids and at least one oil selected from the group consisting of fish oil, animal oil, algae oil, fungal oil, and bacterial oil. The lipid of the present infant formula preferably provides 3 to 7 g per 100 kcal of the nutritional composition, preferably the lipid provides 4 to 6 g per 100 kcal. When in liquid form, e.g. as a ready-to-feed liquid, the infant formula preferably comprises 2.1 to 6.5 g lipid per 100 ml, more preferably 3.0 to 4.0 g per 100 ml. Based on dry weight the present infant formula preferably comprises 12.5 to 40 wt% lipid, more preferably 19 to 30 wt%. Preferably the lipid comprises the essential fatty acids alpha-linolenic acid (ALA), linoleic acid (LA) and/or long chain polyunsaturated fatty acids (LC-PUFA). The LC-PUFA, LA and/or ALA may be provided as free fatty acids, in triglyceride form, in diglyceride form, in monoglyceride form, in phospholipid form, or as a mixture of one of more of the above. Preferably the present infant formula comprises at least one, preferably at least two lipid sources selected from the group consisting of rape seed oil (such as colza oil, low erucic acid rape seed oil and canola oil), high oleic sunflower oil, high oleic safflower oil, olive oil, marine oils, microbial oils, coconut oil, palm kernel oil. The present infant formula is not human milk.

The present infant formula preferably comprises protein. The protein used in the infant formula is preferably selected from the group consisting of non-human animal proteins, preferably milk proteins, vegetable proteins, such as preferably soy protein and/or rice protein, and mixtures thereof. The present infant formula preferably contains casein and/or whey protein, more preferably bovine whey proteins and/or bovine casein. Thus in one embodiment the protein in the present infant formula comprises protein selected from the group consisting of whey protein and casein, preferably whey protein and casein, preferably the whey protein and/or casein is from cow's milk. Preferably the protein comprises less than 5 wt% based on total protein of free amino acids, dipeptides, tripeptides or hydrolyzed protein. The present infant formula preferably comprises casein and whey proteins in a weight ratio casein : whey protein of 10 : 90 to 90 : 10, more preferably 20 : 80 to 80 : 20, even more preferably 35 : 65 to 55 : 45.

In order to meet the caloric requirements of an infant or toddler, the infant formula preferably comprises 45 to 200 kcal/100 ml liquid. Preferably the infant formula has 55 to 80 kcal/100 ml liquid, even more preferably 60 to 70 kcal/100 ml liquid. This caloric density ensures an optimal ratio between water and calorie consumption. The osmolarity of the present infant formula is preferably between 150 and 420 mOsmol/l, more preferably 260 to 320 mOsmol/l. The low osmolarity aims to further reduce the gastrointestinal stress.

When the infant formula is in a ready to feed, liquid form, the preferred volume administered on a daily basis is in the range of about 80 to 2500 ml, more preferably about 200 to 1200 ml per day. Preferably, the number of feedings per day is between 1 and 10, preferably between 3 and 8. In one embodiment the infant formula is administered daily for a period of at least 2 days, preferably for a period of at least 4 weeks, preferably for a period of at least 8 weeks, more preferably for a period of at 25 least 12 weeks, in a liquid form wherein the total volume administered daily is between 200 ml and 1200 ml and wherein the number of feedings per day is between 1 and 10.

The present infant formula comprises 2.5 to 20 wt% total non-digestible oligosaccharide, more preferably 2.5 to 15 wt%, even more preferably 3.0 to 10 wt%, most preferably 5.0 to 7.5 wt%, based on dry weight of the nutritional composition. Based on 100 ml the present infant formula preferably comprises 0.35 to 2.5 wt% total non-digestible oligosaccharide, more preferably 0.35 to 2.0 wt%, even more preferably 0.4 to 1.5 wt%, based on 100 ml of the nutritional composition. A lower amount of non-digestible oligosaccharide will be less effective in improving the intestinal microbiota-function, whereas a too high amount will result in side-effects of bloating and abdominal discomfort.

The present infant formula may be in liquid form. The present infant formula may also be in the form of a dry food, preferably in the form of a powder which is accompanied with instructions as to mix said dry food, preferably powder, with a suitable liquid, preferably water. The infant formula used according to the invention preferably comprises other fractions, such as vitamins, minerals, trace elements and other micronutrients in order to make it a complete nutritional composition. Preferably infant formulas comprise vitamins, minerals, trace elements and other micronutrients according to international directives.

In a further aspect, the invention also relates to a non-therapeutic method for providing nutrition to an infant using the infant formula according to the invention, wherein the infant is both formula-fed and breast-fed, wherein the infant is between 0 and 12 months, more preferably between 0 and 6 months, and most preferably between 0 and 4 months.

In an analogous embodiment, the invention relates to a method for providing nutrition to an infant using the infant formula according to the invention, wherein the infant is both formula-fed and breast-fed, wherein the infant is between 0 and 12 months, more preferably between 0 and 6 months, and most preferably between 0 and 4 months.

In yet another analogous embodiment, the invention relates to the use of the infant formula according to the invention for providing nutrition to an infant, wherein the infant is both formula-fed and breast-fed, wherein the infant is between 0 and 12 months, more preferably between 0 and 6 months, and most preferably between 0 and 6 months.

### Examples

### Example 1

Human milk samples from 72 exclusively breastfeeding Chinese mothers and 65 mixed milk feeding Chinese mothers were collected at 42±2 days after delivery. All mothers were healthy, aged 20-40 years, who gave birth to a healthy term-born infant.

The human milk samples were analysed HMOs (3'-SL, 2'-FL, 3-FL and 6'-SL) by liquid chromatography with mass spectrometry based on a method of Bao et al. 2013 (Bao, Y., Chen, C., & Newburg, D. S. (2013). Quantification of neutral human milk oligosaccharides by graphitic carbon high-performance liquid chromatography with tandem mass spectrometry. Analytical biochemistry, 433(1), 28-35.)

.The results are given in Table 1

**Table 1: Average amount of HMOs in milk from mothers employing exclusively breastfeeding (BF - Group I) and mothers employing a combination of breastfeeding and formula feeding, i.e. mixed milk feeding (MMF - Group II).**

| | **2'-FL (µg/ml)** | **3-FL (µg/ml)** | **3'-SL (µg/ml)** | **6'-SL (µg/ml)** |
|---|---|---|---|---|
| **BF Group I** | 997 | 423 | 84 | 309 |
| **MMF Group II** | 993 | 515* | 114 | 385 |

### Example 2

Infant formulae designed for infants aged 0-12 months are prepared using conventional infant formula manufacturing processes. Specific amounts of HMOs are added to the infant formula suitable for feeding infants who receive both infant formula and human breast milk (mixed milk fed infants). Table 2 describes an infant formula according to the invention.

**Table 2: Infant formula**

| **Ingredients (unit)** | **Infant formula for infants aged 0-12 months** |
|---|---|
| Proteins (g/100 ml) | 1.3 |
| Fat (g/100 ml) | 3.4 |
| Carbohydrates (g/100 ml) | 7.3 |
| Lactose (g/100 ml) | 6.6 |
| GOS + FOS (g/100 ml) | 0.7 |
| Total nucleotides (mg/100 ml) | 2.3 |
| 2'-FL (mg/100 ml) | 100 |
| 3-FL (mg/100 ml) | 20 |
| 3'-SL (mg/100 ml) | 5 |
| 6'-SL (mg/100 ml) | 25 |

## Claims

1. An infant formula suitable for feeding infants who receive both infant formula and human breast milk (mixed milk fed infants), comprising
a) 2'-fucosyllactose (2'-FL) and 3-fucosyllactose (3-FL) in a weight ratio 2'-FL : 3-FL of at least 2.5:1, and
b) 3-FL in a concentration of at most 240 µg/ml; or at most 180 mg/100 g dry weight; or at most 36 mg/100 kcal, and
c) 2'-FL in a concentration of at least 500 µg/ml; or at least 375 mg/100 g dry weight; or at least 75 mg/100 kcal.

2. The infant formula according to claim 1, further comprising
d) 3'-sialylactose (3'-SL) in a weight ratio 2'-FL : 3'-SL of at least 11.2:1, and
e) 3'-SL in a concentration of at most 100 µg/ml; or at most 75 mg/100 g dry weight; or at most 15 mg/100 kcal.

3. The infant formula according to claim 1, further comprising
f) 6'-sialyllactose (6'-SL) in a weight ratio 2'-FL : 6'-SL of at least 1.8:1, and
g) 6'-SL in a concentration of at most 300 µg/ml; or at most 225 mg/100 g dry weight; or at most 45 mg/100 kcal.

4. The infant formula according to claim 1, further comprising
d) 3'-sialylactose (3'-SL) in a weight ratio 2'-FL : 3'-SL of at least 11.2:1, and
e) 3'-SL in a concentration of at most 100 µg/ml; or at most 75 mg/100 g dry weight; or at most 15 mg/100 kcal, and
f) 6'-sialyllactose (6'-SL) in a weight ratio 2'-FL : 6'-SL of at least 1.8:1, and
g) 6'-SL in a concentration of at most 300 µg/ml; or at most 225 mg/100 g dry weight; or at most 45 mg/100 kcal.

5. The infant formula according to any one of claims 1-4, wherein 2'-FL is present in a concentration in the range of 500 µg/ml - 1500 µg/ml, preferably in the range of 750 µg/ml - 1250 µg/ml; or in the range of 375 mg/100 g dry weight - 1125 mg/100 g dry weight, preferably in the range of 560 mg/100 g dry weight - 940 mg/100 g dry weight; or in the range of 75 mg/100 kcal - 225 mg/100 kcal, preferably in the range of 110 mg/100 kcal - 190 mg/100 kcal.

6. The infant formula according to any one of claims 1-5, wherein 3-FL is present in a concentration in the range of 50 µg/ml - 240 µg/ml; or in the range of 37 mg/100 g dry weight - 180 mg/100 g dry weight; or in the range of 7 mg/100 kcal - 36 mg/100 kcal.

7. The infant formula according to any one of claims 1-6, wherein 3'-SL is present in a concentration in the range of 10 µg/ml - 100 µg/ml, preferably in the range of 10 µg/ml - 75 µg/ml; or in the range of 7 mg/100 g dry weight- 75 mg/100 g dry weight, preferably in the range of 7 mg/100 g dry weight - 56 mg/100 g dry weight; or in the range of 1 mg/100 kcal - 15 mg/100 kcal, preferably in the range of 1 mg/100 kcal - 12 mg/100 kcal.

8. The infant formula according to any one of claims 1-7, wherein 6'-SL is present in a concentration in the range of 50 µg/ml - 300 µg/ml, preferably in the range of 50 µg/ml - 250 µg/ml; or in the range of 37 mg/100 g dry weight- 225 mg/100 g dry weight, preferably in the range of 37 mg/100 g dry weight - 190 mg/100 g dry weight; or in the range of 7 mg/100 kcal - 45 mg/100 kcal, preferably in the range of 7 mg/100 kcal - 38 mg/100 kcal.

9. The infant formula according to any one of claims 1-8, further comprising fructo-oligosaccharides, preferably fructo-oligosaccharides with an average degree of polymerisation above 20.

10. The infant formula of any one of claims 1-9, further comprising galacto-oligosaccharides, preferably galacto-oligosaccharides with an average degree of polymerisation in the range from 3 to 7.

11. The infant formula of any one of claims 1-10, comprising fructo-oligosaccharides with an average degree of polymerisation above 20 and galacto-oligosaccharides with an average degree of polymerisation in the range from 3 to 7, preferably in a weight ratio of fructo-oligosaccharides to galacto-oligosaccharides in the range of 10 : 1 to 1 : 100.

12. The infant formula of any one of claims 1-11, comprising lipid, protein and digestible carbohydrates, wherein the lipid provides 3 to 7 g lipid per 100 kcal, the protein provides 1.6 to 4 g per 100 kcal and the digestible carbohydrate provides 5 to 20 g per 100 kcal of the nutritional composition.

13. Non-therapeutic method for providing nutrition to an infant using the infant formula according to any one of the preceding claims, wherein the infant is both formula-fed and breastfed, wherein the infant is between 0 and 24 months, more preferably between 0 and 12 months, and most preferably between 0 and 6 months.

14. Use of the infant formula according to any one of claims 1 to 12 for providing nutrition to an infant, wherein the infant is both formula-fed and breastfed, wherein the infant is between 0 and 24 months, more preferably between 0 and 12 months, and most preferably between 0 and 6 months.

15. The non-therapeutic method according to claim 13 or use according to claim 14, wherein the infant is fed breast milk from a mongolian mother.

## Patentansprüche

1. Säuglingsnahrung, geeignet für die Ernährung von Säuglingen, die sowohl Säuglingsnahrung als auch Muttermilch erhalten (Misch-Milch ernährte Säuglinge), umfassend
a) 2'-Fucosyllactose (2'-FL) und 3-Fucosyllactose (3-FL) in einem Gewichtsverhältnis 2'-FL : 3-FL von mindestens 2,5:1, und
b) 3-FL in einer Konzentration von höchstens 240 µg/ml; oder höchstens 180 mg/100 g Trockengewicht; oder höchstens 36 mg/100 kcal, und
c) 2'-FL in einer Konzentration von mindestens 500 µg/ml; oder mindestens 375 mg/100 g Trockengewicht; oder mindestens 75 mg/100 kcal.

2. Säuglingsnahrung nach Anspruch 1, ferner umfassend
d) 3'-Sialylactose (3'-SL) in einem Gewichtsverhältnis 2'-FL : 3'-SL von mindestens 11,2:1, und
e) 3'-SL in einer Konzentration von höchstens 100 µg/ml; oder höchstens 75 mg/100 g Trockengewicht; oder höchstens 15 mg/100 kcal.

3. Säuglingsnahrung nach Anspruch 1, ferner umfassend
f) 6'-Sialyllactose (6'-SL) in einem Gewichtsverhältnis 2'-FL : 6'-SL von mindestens 1,8:1, und
g) 6'-SL in einer Konzentration von höchstens 300 µg/ml; oder höchstens 225 mg/100 g Trockengewicht; oder höchstens 45 mg/100 kcal.

4. Säuglingsnahrung nach Anspruch 1, ferner umfassend
d) 3'-Sialylactose (3'-SL) in einem Gewichtsverhältnis von 2'-FL : 3'-SL von mindestens 11,2:1, und
e) 3'-SL in einer Konzentration von höchstens 100 µg/ml; oder höchstens 75 mg/100 g Trockengewicht; oder höchstens 15 mg/100 kcal, und
f) 6'-Sialyllactose (6'-SL) in einem Gewichtsverhältnis 2'-FL : 6'-SL von mindestens 1,8:1, und
g) 6'-SL in einer Konzentration von höchstens 300 µg/ml oder höchstens 225 mg/100 g Trockengewicht oder höchstens 45 mg/100 kcal.

5. Säuglingsnahrung nach einem der Ansprüche 1-4, wobei 2'-FL in einer Konzentration im Bereich von 500 µg/ml - 1500 µg/ml, bevorzugt im Bereich von 750 µg/ml - 1250 µg/ml; oder im Bereich von 375 mg/100 g Trockengewicht - 1125 mg/100 g Trockengewicht, bevorzugt im Bereich von 560 mg/100 g Trockengewicht - 940 mg/100 g Trockengewicht; oder im Bereich von 75 mg/100 kcal - 225 mg/100 kcal, bevorzugt im Bereich von 110 mg/100 kcal - 190 mg/100 kcal, vorliegt.

6. Säuglingsnahrung nach einem der Ansprüche 1-5, wobei 3-FL in einer Konzentration im Bereich von 50 µg/ml - 240 µg/ml; oder im Bereich von 37 mg/100 g Trockengewicht - 180 mg/100 g Trockengewicht; oder im Bereich von 7 mg/100 kcal - 36 mg/100 kcal, vorliegt.

7. Säuglingsnahrung nach einem der Ansprüche 1-6, wobei 3'-SL in einer Konzentration im Bereich von 10 µg/ml - 100 µg/ml, bevorzugt im Bereich von 10 µg/ml - 75 µg/ml; oder im Bereich 7 mg/100 g Trockengewicht - 75 mg/100 g Trockengewicht, bevorzugt im Bereich von 7 mg/100 g Trockengewicht - 56 mg/100 g Trockengewicht; oder im Bereich von 1 mg/100 kcal - 15 mg/100 kcal, bevorzugt im Bereich von 1 mg/100 kcal - 12 mg/100 kcal, vorliegt.

8. Säuglingsnahrung nach einem der Ansprüche 1-7, wobei 6'-SL in einer Konzentration im Bereich von 50 µg/ml - 300 µg/ml, bevorzugt im Bereich von 50 µg/ml - 250 µg/ml, oder im Bereich 37 mg/100 g Trockengewicht - 225 mg/100 g Trockengewicht, bevorzugt im Bereich von 37 mg/100 g Trockengewicht - 190 mg/100 g Trockengewicht; oder im Bereich von 7 mg/100 kcal - 45 mg/100 kcal, bevorzugt im Bereich von 7 mg/100 kcal - 38 mg/100 kcal, vorliegt.

9. Säuglingsnahrung nach einem der Ansprüche 1-8, ferner umfassend Fructo-Oligosaccharide, bevorzugt Fructo-Oligosaccharide mit einem durchschnittlichen Polymerisationsgrad über 20.

10. Säuglingsnahrung nach einem der Ansprüche 1-9, ferner umfassend Galacto-Oligosaccharide, bevorzugt Galacto-Oligosaccharide mit einem durchschnittlichen Polymerisationsgrad im Bereich von 3 bis 7.

11. Säuglingsnahrung nach einem der Ansprüche 1-10, umfassend Fructo-Oligosaccharide mit einem durchschnittlichen Polymerisationsgrad über 20 und Galacto-Oligosaccharide mit einem durchschnittlichen Polymerisationsgrad im Bereich von 3 bis 7, bevorzugt in einem Gewichtsverhältnis von Fructo-Oligosacchariden zu Galacto-Oligosacchariden im Bereich von 10 : 1 bis 1 : 100.

12. Die Säuglingsnahrung nach einem der Ansprüche 1-11, umfassend Lipid, Protein und verdauliche Kohlenhydrate, wobei das Lipid 3 bis 7 g Lipid pro 100 kcal bereitstellt, das Protein 1,6 bis 4 g pro 100 kcal bereitstellt und das verdauliche Kohlenhydrat 5 bis 20 g pro 100 kcal der Nährstoffzusammensetzung bereitstellt.

13. Nichttherapeutische Verfahren zur Nahrungsbereitstellung für einen Säugling unter Verwendung der Säuglingsnahrung nach einem der vorstehenden Ansprüche, wobei der Säugling sowohl mit Flaschennahrung ernährt als auch mit Muttermilch ernährt wird, wobei der Säugling zwischen 0 und 24 Monaten, mehr bevorzugt zwischen 0 und 12 Monaten und am meisten bevorzugt zwischen 0 und 6 Monaten alt ist.

14. Verwendung der Säuglingsnahrung nach einem der Ansprüche 1 bis 12 zur Nahrungsbereitstellung für einen Säugling, wobei der Säugling sowohl mit Flaschennahrung ernährt als auch mit Muttermilch ernährt wird, wobei der Säugling zwischen 0 und 24 Monaten, mehr bevorzugt zwischen 0 und 12 Monaten und am meisten bevorzugt zwischen 0 und 6 Monaten alt ist.

15. Nichttherapeutische Methode nach Anspruch 13 oder Verwendung nach Anspruch 14, wobei das Kind mit Muttermilch einer mongolischen Mutter ernährt wird.

## Revendications

1. - Formule infantile adaptée à l'alimentation des nourrissons qui reçoivent à la fois une formule infantile et du lait maternel humain (nourrissons nourris au lait mixte), comprenant
a) du 2'-fucosyllactose (2'-FL) et du 3-fucosyllactose (3-FL) dans un rapport pondéral 2'-FL : 3-FL d'au moins 2,5:1, et
b) 3-FL dans une concentration d'au plus 240 µg/ml ; ou d'au plus 180 mg/100 g de poids sec ; ou d'au plus 36 mg/100 kcal, et
c) 2'-FL dans une concentration d'au moins 500 µg/ml ; ou d'au moins 375 mg/100 g de poids sec ; ou d'au moins 75 mg/100 kcal.

2. - Formule infantile selon la revendication 1, comprenant en outre
d) du 3'-sialyllactose (3'-SL) dans un rapport pondéral 2'-FL : 3'-SL d'au moins 11,2:1, et
e) du 3'-SL dans une concentration d'au plus 100 µg/ml ; ou d'au plus 75 mg/100 g de poids sec ; ou d'au plus 15 mg/100 kcal.

3. - Formule infantile selon la revendication 1, comprenant en outre
f) du 6'-sialyllactose (6'-SL) dans un rapport pondéral 2'-FL : 6'-SL d'au moins 1,8:1, et
g) du 6'-SL dans une concentration d'au plus 300 µg/ml ; ou d'au plus 225 mg/100 g de poids sec ; ou d'au plus 45 mg/100 kcal.

4. - Formule infantile selon la revendication 1, comprenant en outre
d) du 3'-sialyllactose (3'-SL) dans un rapport pondéral 2'-FL : 3'-SL d'au moins 11,2:1, et
e) du 3'-SL dans une concentration d'au plus 100 µg/ml ; ou d'au plus 75 mg/100 g de poids sec ; ou d'au plus 15 mg/100 kcal, et
f) du 6'-sialyllactose (6'-SL) dans un rapport pondéral 2'-FL : 6'-SL d'au moins 1,8:1, et
g) du 6'-SL dans une concentration d'au plus 300 µg/ml ; ou d'au plus 225 mg/100 g de poids sec ; ou d'au plus 45 mg/100 kcal.

5. - Formule infantile selon l'une quelconque des revendications 1 à 4, dans laquelle le 2'-FL est présent à une concentration dans la plage de 500 µg/ml à 1500 µg/ml, de préférence dans la plage de 750 µg/ml à 1250 µg/ml ; ou dans la plage de 375 mg/100 g de poids sec à 1125 mg/100 g de poids sec, de préférence dans la plage de 560 mg/100 g de poids sec à 940 mg/100 g de poids sec ; ou dans la plage de 75 mg/100 kcal à 225 mg/100 kcal, de préférence dans la plage de 110 mg/100 kcal à 190 mg/100 kcal.

6. - Formule infantile selon l'une quelconque des revendications 1 à 5, dans laquelle le 3-FL est présent à une concentration dans la plage de 50 µg/ml à 240 µg/ml ; ou dans la plage de 37 mg/100 g de poids sec à 180 mg/100 g de poids sec ; ou dans la plage de 7 mg/100 kcal à 36 mg/100 kcal.

7. - Formule infantile selon l'une quelconque des revendications 1 à 6, dans laquelle le 3'-SL est présent en une concentration dans la plage de 10 µg/ml à 100 µg/ml, de préférence dans la plage de 10 µg/ml à 75 µg/ml ; ou dans la plage de 7 mg/100 g de poids sec à 75 mg/100 g de poids sec, de préférence dans la plage de 7 mg/100 g de poids sec à 56 mg/100 g de poids sec ; ou dans la plage de 1 mg/100 kcal à 15 mg/100 kcal, de préférence dans la plage de 1 mg/100 kcal à 12 mg/100 kcal.

8. - Formule infantile selon l'une quelconque des revendications 1 à 7, dans laquelle le 6'-SL est présent à une concentration dans la plage de 50 µg/ml à 300 µg/ml, de préférence dans la plage de 50 µg/ml à 250 µg/ml ; ou dans la plage de 37 mg/100 g de poids sec à 225 mg/100 g de poids sec, de préférence dans la plage de 37 mg/100 g de poids sec à 190 mg/100 g de poids sec ; ou dans la plage de 7 mg/100 kcal à 45 mg/100 kcal, de préférence dans la plage de 7 mg/100 kcal à 38 mg/100 kcal.

9. - Formule infantile selon l'une quelconque des revendications 1 à 8, comprenant en outre des fructo-oligosaccharides, de préférence des fructo-oligosaccharides ayant un degré moyen de polymérisation supérieur à 20.

10. - Formule infantile selon l'une quelconque des revendications 1 à 9, comprenant en outre des galacto-oligosaccharides, de préférence des galacto-oligosaccharides ayant un degré moyen de polymérisation dans la plage de 3 à 7.

11. - Formule infantile selon l'une quelconque des revendications 1 à 10, comprenant des fructo-oligosaccharides ayant un degré moyen de polymérisation supérieur à 20 et des galacto-oligosaccharides ayant un degré moyen de polymérisation dans la plage de 3 à 7, de préférence dans un rapport pondéral des fructo-oligosaccharides aux galacto-oligosaccharides dans la plage de 10 : 1 à 1 : 100.

12. - Formule infantile selon l'une quelconque des revendications 1 à 11, comprenant des lipides, des protéines et des glucides digestibles, dans laquelle les lipides fournissent 3 à 7 g de lipides pour 100 kcal, les protéines fournissent 1,6 à 4 g pour 100 kcal et les glucides digestibles fournissent 5 à 20 g pour 100 kcal de la composition nutritionnelle.

13. - Procédé non thérapeutique pour fournir une nutrition à un nourrisson à l'aide de la formule infantile selon l'une quelconque des revendications précédentes, dans lequel le nourrisson est à la fois nourri par la formule et nourri au sein, dans lequel le nourrisson est âgé de 0 à 24 mois, de façon davantage préférée de 0 à 12 mois, et de la façon que l'on préfère le plus de 0 à 6 mois.

14. - Utilisation de la formule infantile selon l'une quelconque des revendications 1 à 12 pour fournir une nutrition à un nourrisson, dans laquelle le nourrisson est à la fois nourri par la formule et nourri au sein, dans laquelle le nourrisson est âgé de 0 à 24 mois, de façon davantage préférée de 0 à 12 mois, et de la façon que l'on préfère le plus de 0 à 6 mois.

15. - Procédé non thérapeutique selon la revendication 13 ou utilisation selon la revendication 14, dans lequel ou dans laquelle le nourrisson est nourri au lait maternel d'une mère mongole.
